# EUROPEAN PATENT APPLICATION

(11) **EP 4 769 534 A2**
(43) Date of publication of application: **01.07.2026**
(21) Application number: 26178870.7
(22) Date of filing: 15.05.2026
(51) Int. Cl.: H01M 4/134, H01M 10/0525, H01M 10/0585, H01M 4/04, H01M 4/38, H01M 10/44

(54) **SECONDARY BATTERY AND ELECTRONIC DEVICE**

(30) Priority: 16.05.2025 CN 202510637101
(71) Applicant: Ningde Amperex Technology Limited, Ningde City, Fujian Province 352100 (CN)
(72) Inventor: LIU, Shengyuan, Ningde City, Fujian Province 352100 (CN); LI, Wanlin, Ningde City, Fujian Province 352100 (CN); LUO, Hang, Ningde City, Fujian Province 352100 (CN)
(74) Representative: Kraus & Lederer PartGmbB

(57) **Abstract**

A secondary battery, in which an outermost electrode plate of an electrode assembly is a first single-sided positive electrode plate. The first single-sided positive electrode plate includes a first positive electrode coating facing the first negative electrode plate, and a capacity of the first positive electrode coating is C₁₁. The first negative electrode plate includes a first negative electrode coating facing the first positive electrode coating, and a capacity of the first negative electrode coating is C₂₁. The first inner positive electrode plate includes a first inner positive electrode coating facing the first inner negative electrode plate, and a capacity of the first inner positive electrode coating is C₃₁. The first inner negative electrode plate includes a first inner negative electrode coating facing the first inner positive electrode coating, and a capacity of the first inner negative electrode coating is C₄₁, satisfying: 1 < (C₂₁/C₁₁)/(C₄₁/C₃₁) < 1.12.

## Description

### TECHNICAL FIELD

This application relates to the field of battery technology, and in particular, to a secondary battery and an electronic device.

### BACKGROUND

With the rapid development of modem technology, the demand for high-performance energy storage devices is increasing in the fields such as portable electronic devices and electric vehicles. As a highly efficient and environmentally friendly energy storage device, lithium-ion secondary batteries have been widely used in many fields.

Lithium-ion batteries are generally classified into stacked-type lithium-ion batteries and jelly-roll lithium-ion batteries. Stacked-type batteries embrace promising application prospects due to their high energy density and high charge-discharge rate performance. However, for stacked-type lithium-ion batteries, the outermost negative electrode plate is at a relatively high risk of lithium plating.

### SUMMARY

This application aims to provide a secondary battery and an electronic device to alleviate the technical problem that a secondary battery is prone to purple spots or lithium plating.

According to a first aspect, this application discloses a secondary battery. The secondary battery includes an electrode assembly. The electrode assembly includes a first single-sided positive electrode plate, a first negative electrode plate, a first inner positive electrode plate, and a first inner negative electrode plate that are sequentially stacked along a first direction. The first single-sided positive electrode plate is an outermost electrode plate of the electrode assembly. The first single-sided positive electrode plate includes a first positive electrode coating facing the first negative electrode plate, and a capacity of the first positive electrode coating is C₁₁. The first negative electrode plate includes a first negative electrode coating facing the first positive electrode coating, and a capacity of the first negative electrode coating is C₂₁. The first inner positive electrode plate includes a first inner positive electrode coating facing the first inner negative electrode plate, and a capacity of the first inner positive electrode coating is C₃₁. The first inner negative electrode plate includes a first inner negative electrode coating facing the first inner positive electrode coating, and a capacity of the first inner negative electrode coating is C₄₁, satisfying: 1 < (C₂₁/C₁₁)/(C₄₁/C₃₁) ≤ 1.12.

In the above technical solution, the relational expression 1 < (C₂₁/C₁₁)/(C₄₁/C₃₁) ≤ 1.12 defined means that the capacity ratio of the outermost positive and negative electrode plates (the outermost electrode plates along an opposite direction of the first direction Z) is increased to some extent in contrast to the capacity ratio of the inner positive and negative electrode plates, thereby compensating for the relative slip between the first negative electrode plate and the first single-sided positive electrode plate caused by a large expansion rate of the first negative electrode plate during charging and discharging. By increasing the ratio of C₂₁ to C₁₁, even if the first negative electrode plate slips relatively, the first negative electrode plate can still properly receive lithium ions deintercalated from the first single-sided positive electrode plate, thereby effectively reducing the occurrence of purple spots and lithium plating, and improving the safety of the secondary battery. In addition, this arrangement can effectively alleviate the problems such as energy density loss, cost increase, and high-temperature cycling degradation caused by an excessive amount of the first negative electrode coating.

In some embodiments, 1.05 ≤ (C₂₁/C₁₁)/(C₄₁/C₃₁) ≤ 1.11, thereby enabling the first negative electrode plate to more sufficiently receive the lithium ions deintercalated from the first single-sided positive electrode plate, and reducing the risk of lithium plating caused by lithium ion deposition on the surface of the first negative electrode plate. In addition, this arrangement can alleviate the adverse effect caused by an excessively high capacity ratio. For example, this arrangement can further reduce cost and energy density loss.

In some embodiments, it is defined that 1.03 ≤ (C₂₁/C₁₁) ≤ 1.2, thereby enabling the first negative electrode plate to be more adaptable to the first single-sided positive electrode plate during expansion of the first negative electrode plate, and ensuring sufficient space and capacity of the first negative electrode plate for adapting to the volume change caused by expansion. This alleviates compression damage to the overall structure of the electrode assembly caused by excessive expansion between the electrode plates, and improves stability of the internal structure of the secondary battery. Further, the capacity ratio falling within the specified range enables the secondary battery to store and release more electrical energy per unit volume, thereby increasing the energy density of the secondary battery.

In some embodiments, 1.02 ≤ (C₄₁/C₃₁) ≤ 1.18, thereby enabling the first inner positive electrode plate and the first inner negative electrode plate to be more adaptable to each other when the volume changes, reducing structural disruption caused by incompatibility between the electrode plates, and improving the integrity of the internal structure of the secondary battery.

In some embodiments, 75 mAh ≤ C₁₁ ≤ 500 mAh, 78 mAh ≤ C₂₁ ≤ 520 mAh, 75 mAh ≤ C₃₁ ≤ 500 mAh, and 77 mAh ≤ C₄₁ ≤ 510 mAh. This reduces the occurrence of purple spots and lithium plating. In addition, by adjusting the capacity of each electrode plate coating to fall within the specified range, this application improves the versatility of the secondary battery.

In some embodiments, a compaction density of the first negative electrode coating is less than a compaction density of the first inner negative electrode coating, thereby improving the stability of lithium ion transport between the positive electrode and the negative electrode, enabling the lithium ions on the surface of the first negative electrode plate to be distributed more uniformly, and alleviating the lithium plating caused by lithium ion aggregation.

In some embodiments, the first negative electrode plate further includes a third negative electrode coating facing the first inner positive electrode plate. A compaction density of the first negative electrode coating is less than a compaction density of the third negative electrode coating. The first negative electrode coating is closer to the outer layer, and possesses a lower compaction density, thereby making it convenient to sufficiently receive lithium ions, and consequently reducing the occurrence of purple spots and lithium plating. The third negative electrode coating possesses a higher compaction density, making it convenient for the third negative electrode coating to sufficiently react with the first inner positive electrode plate, and increasing the energy density of the secondary battery.

In some embodiments, a coating weight of the first negative electrode coating is greater than a coating weight of the first inner negative electrode coating. The first negative electrode coating applied at a larger coating weight contains a larger amount of negative active material. The larger amount of negative active material can provide more lithium ion intercalation sites, and allow lithium ions to be intercalated into the negative electrode material more uniformly, thereby reducing the lithium plating caused by an excessively high concentration of lithium ions in a local region, and improving the safety of the secondary battery.

In some embodiments, the first negative electrode coating includes a negative active material. The negative active material includes silicon. A mass percentage of the silicon in the negative active material is G₂₁, satisfying: 2.5% ≤ G₂₁ ≤ 50%. In the secondary battery of this application, the mass percentage of silicon in the negative active material falls within the range specified herein, thereby effectively reducing the occurrence of purple spots and lithium plating, consequently being adaptable to the silicon-based negative electrode plate with a relatively high expansion rate and a relatively high capacity, and increasing the energy density of the secondary battery. Further, 10% ≤ G₂₁ ≤ 30%, thereby further reducing the occurrence of purple spots and lithium plating, and increasing the energy density of the secondary battery.

In some embodiments, the secondary battery further includes a housing. The first single-sided positive electrode plate is fixed to an inner wall of the housing. This improves the stability of the internal structure of the secondary battery, makes the internal structure of the secondary battery more compact, and increasing the energy density of the secondary battery. Furthermore, this arrangement makes it convenient to transfer heat from the electrode plate to the outer surface of the housing directly, thereby improving the heat dissipation performance of the secondary battery.

In some embodiments, the electrode assembly further includes a second inner negative electrode plate, a second inner positive electrode plate, a second negative electrode plate, and a second single-sided positive electrode plate that are sequentially stacked along the first direction. Along the first direction, outermost electrode plates on two sides of the electrode assembly are the first single-sided positive electrode plate and the second single-sided positive electrode plate respectively. The second single-sided positive electrode plate includes a second positive electrode coating facing the second negative electrode plate, and a capacity of the second positive electrode coating is C₁₂. The second negative electrode plate includes a second negative electrode coating facing the second positive electrode coating, and a capacity of the second negative electrode coating is C₂₂. The second inner positive electrode plate includes a second inner positive electrode coating facing the second inner negative electrode plate, and a capacity of the second inner positive electrode coating is C₃₂. The second inner negative electrode plate includes a second inner negative electrode coating facing the second inner positive electrode coating, and a capacity of the second inner negative electrode coating is C₄₂, satisfying: 1 < (C₂₂/C₁₂)/(C₄₂/C₃₂) ≤ 1.12.

In some embodiments, 1.02 ≤ (C₂₂/C₁₂) ≤ 1.2, thereby enabling the second negative electrode plate to be more adaptable to the second single-sided positive electrode plate during expansion of the second negative electrode plate, and ensuring sufficient space and capacity for the second negative electrode plate to adapt to the volume change. This alleviates compression damage to the overall structure of the electrode assembly caused by excessive expansion between the electrode plates, and improves the stability of the internal structure of the secondary battery. Further, the capacity ratio falling within the specified range enables the secondary battery to store and release more electrical energy per unit volume, thereby increasing the energy density of the secondary battery.

In some embodiments, along the first direction, one or more third negative electrode plates are stacked between the first inner negative electrode plate and the second inner negative electrode plate. When a plurality of third negative electrode plates are stacked between the first inner negative electrode plate and the second inner negative electrode plate, a third positive electrode plate is stacked between two adjacent third negative electrode plates along the first direction. The plurality of third negative electrode plates and the plurality of third positive electrode plates stacked together increase the total amount of active material, and enable storage of more electrical energy, thereby increasing the energy density of the secondary battery and meeting the demand of electronic devices for high-energy-density power supplies. Further, the multilayer structure allows more active material to come into contact with the electrolyte solution, thereby facilitating rapid intercalation and deintercalation of lithium ions during charging and discharging, and improving the charge rate and discharge rate of the secondary battery.

According to a second aspect, this application further provides an electronic device, including the secondary battery disclosed in any one of the embodiments in the first aspect described above.

Additional aspects and advantages of some embodiments of this application will be partly described or illustrated herein later or expounded through implementation of an embodiment of this application.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components.
FIG. 1 is a schematic structural diagram of a secondary battery according to some embodiments of this application;
FIG. 2 is a schematic diagram of a stacked structure of a positive electrode plate, a separator, and a negative electrode plate according to some embodiments of this application;
FIG. 3 is a schematic diagram of a stacked structure of an electrode assembly according to some embodiments of this application; and
FIG. 4 is a schematic diagram of a stacked structure of an electrode assembly according to some embodiments of this application.

List of reference signs:
1000. secondary battery;
100. electrode assembly;
200. housing;
10. positive electrode plate; 11. positive current collector; 111. first surface; 112. second surface; 12. positive electrode coating; 10a. first single-sided positive electrode plate; 1011. first positive electrode coating; 10b. second single-sided positive electrode plate; 1012. second positive electrode coating; 10c. first inner positive electrode plate; 1031. first inner positive electrode coating; 10d. second inner positive electrode plate; 1032. second inner positive electrode coating; 10e. third positive electrode plate;
20. negative electrode plate; 21. negative current collector; 211. third surface; 212. fourth surface; 22. negative electrode coating; 20a. first negative electrode plate; 2021. first negative electrode coating; 2023. third negative electrode coating; 20b. second negative electrode plate; 2022. second negative electrode coating; 20c. first inner negative electrode plate; 2041. first inner negative electrode coating; 20d. second inner negative electrode plate; 2042. second inner negative electrode coating; 20e. third negative electrode plate;
30. separator;
Z. first direction; X. second direction; Y. third direction.

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

To the extent that no mutual conflict occurs, the technical features described below in different embodiments of this application may be combined with each other.

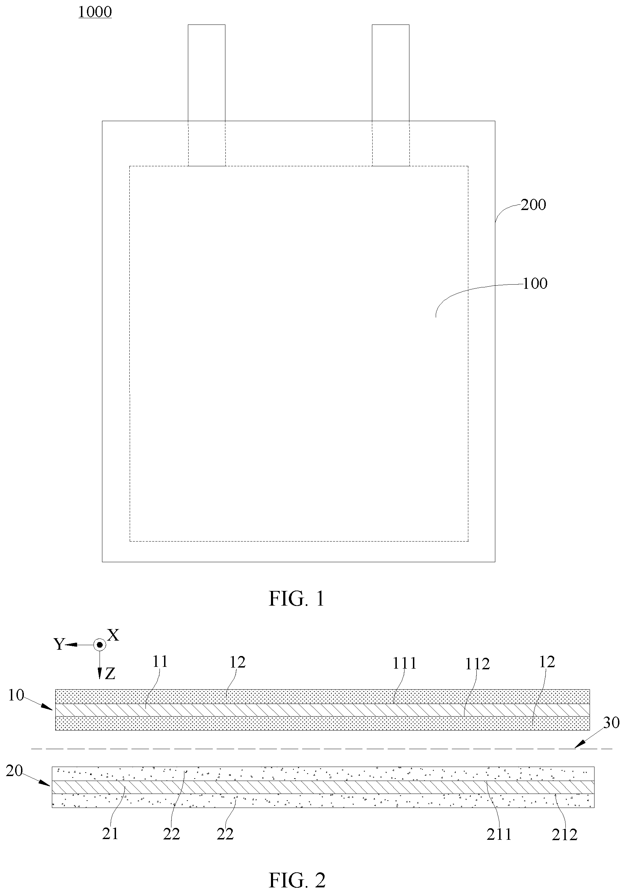

According to a first aspect, this application discloses a secondary battery 1000. Referring to FIG. 1, the secondary battery 1000 includes an electrode assembly 100, a housing 200, and an electrolyte solution (not shown in the figure). The housing 200 is configured to accommodate the electrode assembly 100 and the electrolyte solution. The electrolyte solution in the housing 200 infiltrates the electrode assembly 100 to undergo electrochemical reactions.

With respect to the electrode assembly 100, referring to FIG. 1 and FIG. 2, the electrode assembly 100 includes a positive electrode plate 10, a negative electrode plate 20, and a separator 30. FIG. 2 shows a stacked structure of the positive electrode plate 10, the separator 30, and the negative electrode plate 20. For example, along the thickness direction (first direction Z) of the positive electrode plate 10 and/or the negative electrode plate 20, a plurality of positive electrode plates 10 and a plurality of negative electrode plates 20 are alternately stacked. The separator 30 is stacked between a positive electrode plate 10 and a negative electrode plate 20 that are adjacent to each other. The separator 30 is configured to dielectrically isolate the positive electrode plate 10 from the negative electrode plate 20.

Referring to FIG. 2, the positive electrode plate 10 includes a positive current collector 11 and a positive electrode coating 12. The positive current collector 11 may be made of aluminum foil, titanium foil, nickel foil, stainless steel foil, or the like that is flat on the whole. The positive electrode coating 12 may be disposed on at least one surface of the positive current collector 11 in a thickness direction of the current collector. For example, along the first direction Z, the positive current collector 11 includes a first surface 111 and a second surface 112 disposed opposite to each other. The positive electrode coating 12 may be disposed on the first surface 111 and/or the second surface 112. The positive electrode coating 12 includes a positive active material, a conductive agent, a binder, and the like. The above material components are mixed, stirred well, and then applied to the first surface 111 and/or the second surface 112 to obtain a positive electrode coating 12. The positive active material includes one or more of lithium nickel cobalt manganese oxide, lithium nickel cobalt manganese oxide, lithium cobalt oxide, lithium iron phosphate, lithium nickel cobalt manganese oxide, lithium manganese oxide, lithium manganese iron phosphate, or the like.

Referring to FIG. 2, the negative electrode plate 20 includes a negative current collector 21 and a negative electrode coating 22. The negative current collector 21 may be made of copper foil, titanium foil, nickel foil, stainless steel foil, silver foil, or the like that is flat on the whole. The negative electrode coating 22 may be disposed on at least one surface of the negative current collector 21 in a thickness direction of the current collector. For example, along the first direction Z, the negative current collector 21 includes a third surface 211 and a fourth surface 212 disposed opposite to each other. The negative electrode coating 22 may be disposed on the third surface 211 and/or the fourth surface 212. The negative electrode coating 22 includes a negative active material, a conductive agent, a binder, and the like. Such materials are mixed, stirred well, and then applied to the third surface 211 and/or the fourth surface 212 to obtain a negative electrode coating 22. The negative active material includes one or more of elemental silicon, a silicon carbon composite, a silicon oxygen compound, a silicon alloy, or the like.

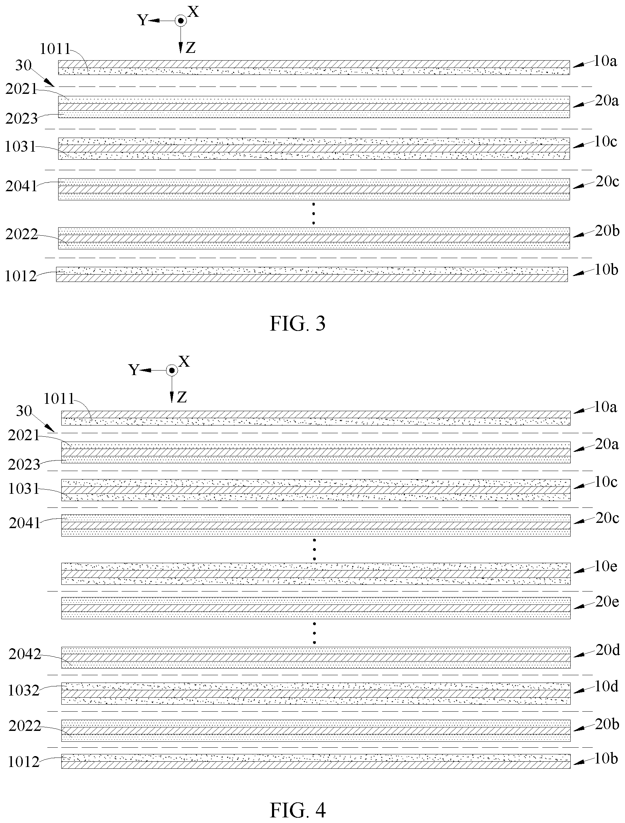

In an embodiment of this application, further referring to FIG. 3, "..." in FIG. 3 represents omission of some positive electrode plates 10, separators 30, and negative electrode plates 20; the positive electrode plates 10 may be divided into a first single-sided positive electrode plate 10a and a first inner positive electrode plate 10c; and the negative electrode plate 20 may be divided into a first negative electrode plate 20a and a first inner negative electrode plate 20c. Along the first direction Z, the first single-sided positive electrode plate 10a, the first negative electrode plate 20a, the first inner positive electrode plate 10c, and the first inner negative electrode plate 20c are stacked sequentially. The first single-sided positive electrode plate 10a is the outermost electrode plate of the electrode assembly 100. For example, along an opposite direction of the first direction Z, the outermost electrode plate of the electrode assembly 100 is the first single-sided positive electrode plate 10a. An electrode plate adjacent to the first single-sided positive electrode plate 10a is the first negative electrode plate 20a. The first inner positive electrode plate 10c is disposed between the first negative electrode plate 20a and the first inner negative electrode plate 20c.

In an example, a three-dimensional coordinate system is defined using three perpendicular directions: a first direction Z, a second direction X, and a third direction Y. The first direction Z represents the thickness direction of the positive electrode plate 10 and/or the negative electrode plate 20. The second direction X represents the length direction of the positive electrode plate 10 and/or the negative electrode plate 20. The third direction Y represents the width direction of the positive electrode plate 10 and/or the negative electrode plate 20. In other embodiments, the second direction X may be the width direction of the positive electrode plate 10 and/or the negative electrode plate 20, and accordingly, the third direction Y is the length direction of the positive electrode plate 10 and/or the negative electrode plate 20.

It needs to be noted that in this embodiment of this application, the first single-sided positive electrode plate 10a is coated with the positive electrode coating 12 on only one side. For example, the first single-sided positive electrode plate 10a is coated with the first positive electrode coating 1011 only on the surface facing the first negative electrode plate 20a. A side of the first single-sided positive electrode plate 10a, which faces away from the first negative electrode plate 20a, is not provided with a corresponding negative electrode plate 20. Therefore, this side does not need to be coated with a positive electrode coating 12. In contrast to double-sided coating, in this embodiment of this application, the outermost first single-sided positive electrode plate 10a is coated with the first positive electrode coating 1011 on only one side, thereby saving space and increasing the energy density of the secondary battery 1000.

However, for the first negative electrode plate 20a, a negative electrode coating 22 may be provided on both sides. For example, the first negative electrode plate 20a includes a first negative electrode coating 2021 and a third negative electrode coating 2023. The first negative electrode coating 2021 faces the first single-sided positive electrode plate 10a, and can undergo a lithium-ion deintercalation reaction with the first single-sided positive electrode plate 10a to provide a capacity for the secondary battery 1000. The third negative electrode coating 2023 faces the first inner positive electrode plate 10c, and can undergo a lithium-ion deintercalation reaction with the first inner positive electrode plate 10c to provide a capacity for the secondary battery 1000. A corresponding positive electrode plate 10 is provided on both sides of the first negative electrode plate 20a in the thickness direction of the electrode plate. The first negative electrode plate 20a may be coated with the negative electrode coating 22 on both sides, thereby fully utilizing the internal space of the secondary battery 1000, and increasing the energy density of the secondary battery 1000.

However, through research, the applicant hereof finds that, during charging and discharging of the secondary battery 1000, lithium-ion intercalation and deintercalation reactions occur between the positive electrode coating 12 and the negative electrode coating 22. For the negative electrode coating 22, lithium-ion intercalation is prone to cause a large volume change. Taking a silicon-containing negative active material as an example, when lithium ions are intercalated into the silicon-containing negative active material, expansion occurs between particles of the silicon-containing negative active material, resulting in a large elongation of the negative electrode plate 20 in the second direction X and the third direction Y. Especially, for the negative electrode plates 20 located closer to the outer side, the outer negative electrode plates 20 are less restricted than the inner negative electrode plates 20, thereby further increasing the expansion rate of the outer negative electrode plates 20. In contrast, the volume change of the positive electrode coating 12 during charging and discharging is relatively small. Especially, for the outermost first single-sided positive electrode plate 10a, only one side of the outermost first single-sided positive electrode plate is coated with the positive electrode coating 12, thereby further reducing the expansion rate of the first single-sided positive electrode plate 10a, and consequently resulting in a relatively small elongation of the electrode plate.

In this application, the first single-sided positive electrode plate 10a serves as the outermost electrode plate. During charge-discharge cycling of the secondary battery 1000, the expansion rate of the first negative electrode plate 20a is greater than that of the first single-sided positive electrode plate 10a. This difference in expansion rate leads to different elongations between the two electrode plates. The first negative electrode plate 20a elongates to a greater degree in the second direction X and the third direction Y, but the first single-sided positive electrode plate 10a elongates to a lesser degree in the second directions X and the third direction Y. This makes a relative slip prone to occur between the first negative electrode plate 20a and the first single-sided positive electrode plate 10a. Especially, in the case that the first single-sided positive electrode plate 10a is fixed to the housing 100, the first single-sided positive electrode plate 10a is constrained by the housing 100, and therefore, the elongation caused by the expansion of the first single-sided positive electrode plate is restricted, thereby further increasing the slip between the first single-sided positive electrode plate and the first negative electrode sheet 20a.

During the assembling of the secondary battery 1000, the separator 30 separates the first single-sided positive electrode plate 10a from the first negative electrode plate 20a, and can be fixed between the first single-sided positive electrode plate 10a from the first negative electrode plate 20a by adhesive bonding or other means. However, due to the relative slip between the first negative electrode plate 20a and the first single-sided positive electrode plate 10a, the four corners of the first negative electrode plate 20a are subjected to relatively large tensile stress. Over time, the tensile stress gradually disrupts the bond between the separator 30 and the four corners of the first negative electrode plate 20a, causing the four corners to lose adhesion to the separator 30 first. Once the four corners of the first negative electrode plate 20a lose adhesion to the separator 30, the four corners are directly exposed to the electrolyte solution. In addition, a relatively large gap is formed between each of the corners and the first single-sided positive electrode plate 10a. Consequently, a smaller part of the first negative electrode plate 20a corresponds to the first single-sided positive electrode plate 10a, thereby leading to an insufficient capacity of the first negative electrode plate 20a. During charging of the secondary battery 1000, purple spots are prone to occur at an interface of the first negative electrode plate 20a. The purple spots further lead to lithium plating, and make the secondary battery 1000 prone to short-circuiting or thermal runaway, thereby posing a safety hazard.

To mitigate the above problems, in an embodiment of this application, referring to FIG. 3, the capacity of the first positive electrode coating 1011 is C₁₁, and the capacity of the first negative electrode coating 2021 is C₂₁. The first inner positive electrode plate 10c includes a first inner positive electrode coating 1031 facing the first inner negative electrode plate 20c. The capacity of the first inner positive electrode coating 1031 is C₃₁. The first inner negative electrode plate 20c includes a first inner negative electrode coating 2041 facing the first inner positive electrode coating 1031. The capacity of the first inner negative electrode coating 2041 is C₄₁, satisfying: 1 < (C₂₁/C₁₁)/(C₄₁/C₃₁) ≤ 1.12. Any value in the range of 1 (excluding 1) to 1.12 may be selected, such as 1.01, 1.02, 1.03, 1.04, 1.05, 1.06, 1.07, 1.08, 1.09, 1.1, 1.11, or 1.12.

In the above technical solution, the capacity ratio C₂₁/C₁₁ of the first single-sided positive electrode plate 10a to the first negative electrode plate 20a that are adjacent to each other reflects a relative amount of the positive and negative active materials. When the capacity C₂₁ of the first negative electrode coating 2021 is larger than the capacity C₁₁ of the first positive electrode coating 1011, the first negative electrode plate 20a can accommodate more lithium ions deintercalated from the first single-sided positive electrode plate 10a during charging and discharging, thereby alleviating lithium plating caused by lithium ion deposition on the surface of the first negative electrode plate 20a.

For the first inner positive electrode plate 10c and the first inner negative electrode plate 20c that are adjacent to each other, the expansion difference between the two electrode plates is relatively small, and the risk of relative slip is relatively low. In other words, the risk of lithium plating in the inner layers is relatively small. In this embodiment of this application, the relational expression 1 < (C₂₁/C₁₁)/(C₄₁/C₃₁) ≤ 1.12 defined means that the capacity ratio of the outermost positive and negative electrode plates (the outermost electrode plates along an opposite direction of the first direction Z) is increased to some extent in contrast to the capacity ratio of the inner positive and negative electrode plates, thereby compensating for the relative slip between the first negative electrode plate 20a and the first single-sided positive electrode plate 10a caused by a large expansion rate of the first negative electrode plate during charging and discharging. By increasing the ratio of C₂₁ to C₁₁, even if the first negative electrode plate 20a slips relatively, the first negative electrode plate can still properly receive lithium ions deintercalated from the first single-sided positive electrode plate 10a, thereby reducing aggregation of lithium ions, effectively reducing the occurrence of purple spots and lithium plating, and improving the safety of the secondary battery 1000.

Meanwhile, in this embodiment of this application, it is defined that (C₂₁/C₁₁)/(C₄₁/C₃₁) ≤ 1.12, thereby effectively reducing the probability of an excessive capacity ratio. For example, a relatively large capacity ratio may cause a part of the negative active material to be hardly able to participate in electrochemical reactions. An excessive amount of the negative active material not only leads to an increase in cost but also causes the first negative electrode coating 2021 to occupy a relatively large space inside the secondary battery 1000, thereby directly causing energy density loss of the secondary battery 1000. In addition, an excessive capacity ratio also poses risks such as degradation of high-temperature cycling performance. By defining (C₂₁/C₁₁)/(C₄₁/C₃₁) ≤ 1.12, this application can effectively alleviate the problems such as energy density loss, cost increase, and high-temperature cycling degradation caused by an excessive amount of the first negative electrode coating 2021.

Further, it is defined that 1.05 ≤ (C₂₁/C₁₁)/(C₄₁/C₃₁) ≤ 1.11. This range gives rise to a superior difference between the capacity ratio of the outermost positive and negative electrode plates and the capacity ratio of the inner positive and negative electrode plates. For example, when the ratio is above 1.05, the first negative electrode plate 20a is further caused to possess a sufficient capacity relative to the first single-sided positive electrode plate 10a. During charging and discharging of the secondary battery 1000, even considering changes in the lithium-ion migration path and reaction caused by the factors such as relative slip of the first negative electrode plate 20a, the first negative electrode plate 20a can still more sufficiently receive the lithium ions deintercalated from the first single-sided positive electrode plate 10a, thereby reducing the risk of occurrence of purple spots or lithium plating caused by the aggregation of lithium ions on the surface of the first negative electrode plate 20a. In addition, the upper limit of the ratio is defined as 1.1, thereby alleviating the adverse effect caused by an excessively high capacity ratio. For example, this arrangement can further reduce cost and energy density loss, and alleviate the problems such as degradation of high-temperature cycling performance.

With reference to the capacity ratio of the first inner negative electrode coating 2041 to the first inner positive electrode coating 1031, in an embodiment of this application, it is defined that 1.02 ≤ (C₄₁/C₃₁) ≤ 1.18. Any value within the range of 1.02 to 1.18 may be selected, such as 1.01, 1.02, 1.03, 1.04, 1.05, 1.06, 1.07, 1.08, 1.09, 1.1, 1.11, 1.12, 1.13, 1.14, 1.15, 1.16, 1.17, or 1.18. It needs to be noted that, generally, the capacity of the negative electrode coating is greater than the capacity of the positive electrode coating, that is, C₄₁/C₃₁ > 1, thereby enabling the negative electrode coating to sufficiently receive the lithium ions deintercalated from the positive electrode coating.

In an embodiment of this application, it is defined that 1.02 ≤ (C₄₁/C₃₁) ≤ 1.18. The capacity ratio falling within this range is conducive to matching the capacity of the first inner negative electrode coating 2041 with the capacity of the first inner positive electrode coating 1031. During charging, the lithium ions deintercalated from the first inner positive electrode coating 1031 can be sufficiently intercalated into the first inner negative electrode coating 2041, thereby reducing the risk of purple spots and lithium plating caused by lithium ion deposition due to an insufficient capacity of the inner negative electrode plate. During discharging, the lithium ions can be smoothly deintercalated from the first inner negative electrode coating 2041 and return to the first inner positive electrode coating 1031, thereby enabling the electrochemical reactions inside the secondary battery 1000 to occur efficiently and reversibly, and improving the overall performance of the secondary battery 1000.

In addition, considering that the environment in which the inner electrode plates are located is relatively stable, defining 1.02 ≤ (C₄₁/C₃₁) ≤ 1.18 enables the first inner positive electrode plate 10c and the first inner negative electrode plate 20c to be more adaptable to each other when the volume changes, and reduces structural disruption caused by incompatibility between the electrode plates, for example, reduces the structural disruption caused by compression due to excessive expansion, thereby improving the integrity of the internal structure of the secondary battery 1000. This also reduces the energy density loss caused by an excessive amount of the first inner negative electrode coating 2041.

With respect to the capacity ratio of the first negative electrode coating 2021 to the first positive electrode coating 1011, on the basis of the capacity ratio of the first inner negative electrode coating 2041 to the first inner positive electrode coating 1031, the capacity ratio of the first negative electrode coating 2021 to the first positive electrode coating 1011 may be appropriately increased. In an embodiment of this application, it is defined that 1.03 ≤ (C₂₁/C₁₁) ≤ 1.2. Any value falling within the range of 1.03 to 1.2 may be selected, such as 1.03, 1.04, 1.05, 1.06, 1.07, 1.08, 1.09, 1.1, 1.11, or 1.12. The ratio falling within this range means that the capacity C₂₁ of the first negative electrode coating 2021 accounts for an more appropriate ratio in contrast to the capacity C₁₁ of the first positive electrode coating 1011. Because the first negative electrode plate 20a expands at a relatively high expansion rate during charging and discharging, there is a risk of relative slip between the first negative electrode plate and the first single-sided positive electrode plate 10a. By defining 1.03 ≤ (C₂₁/C₁₁) ≤ 1.2, this application enables the first negative electrode plate 20a to be more adaptable to the first single-sided positive electrode plate 10a during expansion of the first negative electrode plate, and ensures sufficient space and capacity for the first negative electrode plate 20a to adapt to the volume change. This alleviates compression damage to the overall structure of the electrode assembly 100 caused by excessive expansion between the electrode plates, and improves the stability of the internal structure of the secondary battery 1000.

Further, defining 1.03 ≤ (C₂₁/C₁₁) ≤ 1.2 is conducive to more efficiently utilizing the internal space of the secondary battery 1000, prevents the first negative electrode plate 20a from occupying excessive space due to a relatively large capacity, and reduces the probability that a small capacity hinders sufficient receiving of lithium ions. Defining 1.03 ≤ (C₂₁/C₁₁) ≤ 1.2 enables the secondary battery 1000 to store and release more electrical energy per unit volume, thereby increasing the energy density of the secondary battery 1000.

The capacity C₁₁ of the first positive electrode coating 1011 satisfies: 75 mAh ≤ C₁₁ ≤ 500 mAh, and may be any value falling within the range of 75 mAh to 500 mAh, such as 75 mAh, 80 mAh, 90 mAh, 100 mAh, 120 mAh, 140 mAh, 160 mAh, 180 mAh, 200 mAh, 220 mAh, 240 mAh, 260 mAh, 280 mAh, 300 mAh, 320 mAh, 340 mAh, 360 mAh, 380 mAh, 400 mAh, 420 mAh, 440 mAh, 460 mAh, 480 mAh, or 500 mAh. The lower limit 75 mAh ensures a basic capacity of the secondary battery 1000, provides a sufficient power supply for small, low-power devices such as smartwatches and Bluetooth headsets, and meets the basic operating needs of the devices. The upper limit 500 mAh meets the usage requirements of the devices with higher power demands, such as wireless mice and portable massagers. By adjusting the capacity of each electrode plate coating to fall within the range of 75 mAh to 500 mAh, this application improves the versatility of the secondary battery 1000. If the capacity is relatively small, such as less than 75 mAh, the runtime of the secondary battery 1000 per charge may be insufficient. If the capacity is excessively large, such as greater than 500 mAh, the active material may be hardly able to react sufficiently, resulting in a loss of energy density of the secondary battery 1000.

The capacity of the first negative electrode coating 2021, denoted as C₂₁, may be set to a value slightly greater than the capacity of the positive electrode coating. For example, the capacity satisfies: 78 mAh ≤ C₂₁ ≤ 520 mAh. Similarly, the capacity of the first inner positive electrode coating, denoted as C₃₁, may be set to satisfy: 75 mAh ≤ C₃₁ ≤ 500 mAh, and the capacity of the first inner negative electrode coating, denoted as C₄₁, may be set to satisfy: 77 mAh ≤ C₄₁ ≤ 510 mAh. This reduces the occurrence of purple spots and lithium plating. In addition, by adjusting the capacity of each electrode plate coating to fall within the specified range, this application improves the versatility of the secondary battery 1000.

In some embodiments, referring to FIG. 3, the compaction density of the first negative electrode coating 2021 is less than the compaction density of the first inner negative electrode coating 2041. For example, the compaction density of the first negative electrode coating 2021 is F₂₁, and the compaction density of the first inner negative electrode coating ₂₀₄₁ is F₄₁, satisfying: F₂₁ < F₄₁. This means that the clearance between particles of the active material in the first negative electrode coating 2021 is larger, leaving more space for the expansion of the active material. During charging and discharging of the secondary battery 1000, the negative active material changes in volume due to the intercalation and deintercalation of lithium ions. The relatively large expansion space makes the first negative electrode plate 20a expand at a relatively low expansion rate and makes the first negative electrode plate 20a elongate to a lesser degree in the second direction X and the third direction Y.

Because the expansion rate and elongation of the first negative electrode plate 20a are relatively low, the relative slip between the first negative electrode plate and the adjacent first single-sided positive electrode plate 10a is reduced. The relative slip between electrode plates leads to structural changes at the electrode plate interface, and affects lithium-ion transport and reaction. Reducing the relative slip is conducive to maintaining interface stability, thereby improving the stability of lithium-ion transport between the positive electrode and the negative electrode, and promoting a more uniform distribution of lithium ions on the surface of the first negative electrode plate 20a, and reducing the occurrence of purple spots or lithium plating caused by lithium-ion aggregation.

The capacity of each coating may be adjusted by adjusting the compaction density, the coating weight, or the like. Appropriately reducing the compaction density promotes sufficient intercalation of lithium ions, and reduces the relative slip between the first negative electrode plate 20a and the first single-sided positive electrode plate 10a caused by expansion. An increase in the coating weight can directly increase the loading of the active material in the coating, thereby improving the coating capacity, and consequently reducing the occurrence of purple spots or lithium plating caused by the relative slip between the first negative electrode plate 20a and the first single-sided positive electrode plate 10a.

Referring to FIG. 3, the first negative electrode plate 20a further includes a third negative electrode coating 2023 facing the first inner positive electrode plate 10c. The compaction density of the first negative electrode coating 2021 is less than the compaction density of the third negative electrode coating 2023. For example, if the compaction density of the third negative electrode coating 2023 is F₂₃, and the compaction density of the first negative electrode coating 2021 is F₂₁, satisfying: F₂₁ < F₂₃. The first negative electrode coating 2021 is located closer to the outermost layer of the electrode assembly 100 (the outermost layer in the opposite direction of the first direction Z), and the compaction density F₂₁ of the first negative electrode coating is relatively low. This means that the spacing between particles of the active material in the first negative electrode coating 2021 is relatively large, and can provide a larger buffer space, thereby making it convenient to sufficiently receive lithium ions, and consequently reducing the occurrence of purple spots and lithium plating. Meanwhile, the third negative electrode coating 2023 possesses a higher compaction density, making it convenient for the third negative electrode coating to sufficiently react with the first inner positive electrode plate 10c, and increasing the energy density of the secondary battery 1000.

In an embodiment of this application, on the premise that the above compression density relationships between the coatings are satisfied, the compression densities may be controlled to fall within: 0.8 g/cm³ ≤ F₂₁ ≤ 2 g/cm³, 0.8 g/cm³ ≤ F₂₃ ≤ 2 g/cm³, and 0.8 g/cm³ ≤ F₄₁ ≤ 2 g/cm³. Any value in the range of 0.8 g/cm³ to 2 g/cm³ may be selected, such as 0.8 g/cm³, 0.9 g/cm³, 1 g/cm³, 1.1 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, or 2 g/cm³. With the values falling within the specified ranges, each electrode plate can maintain high structural stability, and a suitable porous structure can be formed between particles of the active material, thereby making it convenient to sufficiently receive lithium ions, and reducing the occurrence of purple spots and lithium plating.

If the compaction density is excessively low, for example, lower than 0.8 g/cm³, the porosity is excessively high, thereby leading to a waste of space and a loss of energy density of the secondary battery 1000. If the compaction density is excessively high, for example, greater than 2 g/cm³, the expansion rate may be relatively high during charging and discharging. Consequently, a severe relative slip is prone to occur between the first single-sided positive electrode plate 10a and the first negative electrode plate 20a, thereby increasing the risk of occurrence of purple spots and lithium plating. Further, if the compaction density is excessively high, the electrolyte solution may be hardly able to thoroughly infiltrate the coating, so that a part of the active material can hardly react electrochemically to a sufficient degree, which may deteriorate the cycling performance of the secondary battery.

In some embodiments, referring to FIG. 3, the coating weight of the first negative electrode coating 2021 is greater than the coating weight of the first inner negative electrode coating 2041. For example, the coating weight of the first negative electrode coating 2021 is Y₂₁, and the coating weight of the first inner negative electrode coating 2041 is Y₄₁, satisfying: Y₂₁ > YF₄₁. The first negative electrode coating 2021 is located closer to the outer side. The first negative electrode coating 2021 applied at a larger coating weight contains a larger amount of negative active material. The larger amount of negative active material can provide more lithium ion intercalation sites, and allow lithium ions to be intercalated into the negative electrode material more uniformly, thereby reducing the purple spots and lithium plating caused by an excessively high concentration of lithium ions in a local region, and improving the safety of the secondary battery 1000.

In some embodiments, referring to FIG. 3, the coating weight of the first negative electrode coating 2021 is Y₂₁. In this application, it is defined that 0.03 g/1540.25 mm² ≤ Y₂₁ ≤ 0.2 g/1540.25 mm², and any value in the range of 0.03 g/1540.25 mm² to 0.2 g/1540.25 mm² may be selected, such as 0.03 g/1540.25 mm², 0.04 g/1540.25 mm², 0.05 g/1540.25 mm², 0.06 g/1540.25 mm², 0.07 g/1540.25 mm², 0.08 g/ 1540.25 mm², 0.09 g/1540.25 mm², 0.1 g/1540.25 mm², 0.11 g/1540.25 mm², 0.12 g/1540.25 mm², 0.13 g/1540.25 mm², 0.14 g/1540.25 mm², 0.15 g/1540.25 mm², 0.16 g/1540.25 mm², 0.17 g/1540.25 mm², 0.18 g/1540.25 mm², 0.19 g/1540.25 mm², or 0.2 g/1540.25 mm².

On the one hand, this arrangement provides sufficient lithium-ion intercalation and deintercalation sites, and enables the secondary battery 1000 to undergo sufficient electrochemical reactions during charging and discharging, thereby endowing the secondary battery 1000 with a relatively high capacity and energy density. On the other hand, this arrangement can reduce the probability that an energy density loss is caused by poor contact between a part of the active material and the electrolyte solution due to an excess coating weight.

Further, this coating weight range is conducive to forming a stable coating structure of a suitable porosity. If the coating weight is excessively low, for example, lower than 0.03 g/1540.25 mm², the first negative electrode coating 2021 may be excessively loose, and is prone to breakage caused by structural instability during charging and discharging. If the coating weight is excessively high, for example, higher than 0.2 g/1540.25 mm², the first negative electrode coating 2021 may be excessively dense, and can hardly be infiltrated thoroughly by the electrolyte solution. Lithium ions can hardly diffuse in the first negative electrode coating 2021, which may affect the cycling performance of the secondary battery 1000. In addition, due to the slowed diffusion rate of lithium ions, the lithium ions are prone to accumulate to cause purple spots and lithium plating.

The second inner negative electrode coating 2041 may be configured similarly with reference to the first negative electrode coating 2021. For example, the coating weight of the second inner negative electrode coating 2041 is Y₄₁, satisfying: 0.03 g/1540.25 mm² ≤ Y₄₁ ≤ 0.2 g/1540.25 mm².

In some other embodiments, the coating weight of the first positive electrode coating 1011 is Y₁₁. This application defines: 0.2 g/1540.25 mm² ≤ Y₁₁ ≤ 0.6 g/1540.25 mm². The coating weight of the first inner positive electrode coating 1031 is Y₃₁, satisfying: 0.2 g/1540.25 mm² ≤ Y₃₁ ≤ 0.6 g/1540.25 mm². This ensures that sufficient lithium ions participate in the reaction during charging and discharging of the secondary battery 1000, thereby increasing the capacity of the secondary battery 1000 and meeting the power requirements of the device. If the coating weight is excessively low, for example, lower than 0.2 g/1540.25 mm², the active material is insufficient, and leads to a decline in battery capacity and can hardly provide sufficient power for the device. On the other hand, if the coating weight is excessively high, for example, higher than 0.6 g/1540.25 mm², the electrode plate is caused to be excessively thick and more difficult to be infiltrated by the electrolyte solution, thereby hindering sufficient reaction of the active material.

In some embodiments, the first negative electrode coating 2021 includes silicon. For example, the negative active material includes one or more of elemental silicon, a silicon carbon composite, a silicon oxygen compound, a silicon alloy, or the like. The theoretical gravimetric capacity of silicon is up to 4200 mAh/g while the theoretical gravimetric capacity of graphite is merely 372 mAh/g. When the first negative electrode coating 2021 includes silicon, the silicon increases the capacity of the first negative electrode plate 20a, increases the energy density of the secondary battery 1000, and makes it convenient to meet the requirement for a long runtime on a single charge.

The mass percentage of silicon in the negative active material, denoted as G₂₁, satisfies: 2.5% ≤ G₂₁ ≤ 50%. Any value in the range of 2.5% to 50% may be selected, such as 2.5%, 3%, 5%, 10%, 15%, 20%, 25%, 30%, 35%, 40%, 45%, or 50%. In an embodiment of this application, it is defined that 1 < (C₂₁/C₁₁)/(C₄₁/C₃₁) ≤ 1.12, thereby effectively reducing the purple spots and lithium plating caused by the relative slip between the first single-sided positive electrode plate 10a and the first negative electrode plate 20a, and consequently being adaptable to a silicon-based negative electrode plate 20 with a relatively large expansion rate and a relatively high capacity. Further, it is defined that 2.5% ≤ G₂₁ ≤ 50%, thereby increasing the energy density of the secondary battery 1000.

If G₂₁ is excessively great, for example, greater than 50%, the volume expansion effect may be caused to be excessively intense, thereby causing a relatively large stress inside the negative electrode coating 22. This may disrupt the structure of the negative electrode coating 22, and give rise to a relatively large slip between the first single-sided positive electrode plate 10a and the first negative electrode plate 20a, posing a relatively high risk of purple spots and lithium plating.

If G₂₁ is excessively small, for example, less than 2.5%, the effect on improving the overall capacity of the negative electrode plate 20 is limited. In contrast to a pure-graphite negative electrode or a negative electrode with a relatively high silicon content, this mass percentage of silicon in the negative active material fails to significantly increase the energy density of the secondary battery 1000, and can hardly meet the demand for a high energy density of the secondary battery 1000.

Further, 10% ≤ G₂₁ ≤ 30%, thereby making the chemical reactions milder and more controllable inside the secondary battery 1000, further reducing the occurrence of purple spots and lithium plating, and increasing the energy density of the secondary battery 1000.

It needs to be noted that in an embodiment of this application, other negative electrode coatings may also include silicon. For example, another negative electrode coating includes one or more of elemental silicon, a silicon carbon composite, a silicon oxygen compound, a silicon alloy, or the like. In this way, the capacity of each negative electrode coating is further increased, and the energy density of the secondary battery 1000 is increased.

In some embodiments, the first single-sided positive electrode plate 10a is fixed to an inner wall of the housing 200. For example, the first single-sided positive electrode plate 10a is fixed to an inner surface of the housing 200 by bonding or other means. Fixing the outermost first single-sided positive electrode plate 10a improves the stability of the internal structure of the secondary battery 1000. Further, the housing 200 of the secondary battery 1000 typically exhibits superior heat dissipation performance. For example, the housing 200 may be made of an aluminum laminated film, a copper laminated film, or the like, endowing the housing 200 with a degree of thermal conductivity. The fixation of the first single-sided positive electrode plate 10a to the housing 200 facilitates direct heat conduction from the first single-sided positive electrode plate 10a to the outer surface of the housing 200, thereby improving the heat dissipation performance of the secondary battery 1000. Further, the fixation can reduce the wobbling of the electrode assembly 100 within the housing 200, for example, reduce the wobbling of the electrode assembly 100 within the housing 200 caused by collisions of the secondary battery 1000. The fixation improves the bonding strength of the electrode assembly 100 within the housing 200, and makes the internal layout of the secondary battery 1000 more compact, thereby efficiently utilizing the space within the housing 200, and increasing the energy density of the battery.

In an embodiment of this application, it is defined that 1 < (C₂₁/C₁₁)/(C₄₁/C₃₁) ≤ 1.12, thereby effectively reducing the purple spots and lithium plating caused by the relative slip between the first single-sided positive electrode plate 10a and the first negative electrode plate 20a, and consequently being particularly adaptable to the secondary battery 1000 in which the first single-sided positive electrode plate 10a is fixed to the housing 200.

In some embodiments, referring to FIG. 4, the positive electrode plates 10 are further divided into a second inner positive electrode plate 10d and a second single-sided positive electrode plate 10b; and the negative electrode plates 20 are further divided into a second inner negative electrode plate 20d and a second negative electrode plate 20b. The second inner negative electrode plate 20d, the second inner positive electrode plate 10d, the second negative electrode plate 20b, and the second single-sided positive electrode plate 10b are sequentially stacked along the first direction Z. For example, along the first direction Z, the outermost electrode plates of the electrode assembly 100 on two sides are the second single-sided positive electrode plate 10b and the first single-sided positive electrode plate 10a respectively. An electrode plate adjacent to the second single-sided positive electrode plate 10b is the second negative electrode plate 20b. The second inner positive electrode plate 10d is disposed between the second negative electrode plate 20b and the second inner negative electrode plate 20d.

The second single-sided positive electrode plate 10b is coated with the positive electrode coating 12 on only one side. For example, the second single-sided positive electrode plate 10b is coated with the second positive electrode coating 1012 only on the surface facing the second negative electrode plate 20b. A side of the second single-sided positive electrode plate 10b, which faces away from the second negative electrode plate 20b, is not provided with a corresponding negative electrode plate 20. Therefore, this side does not need to be coated with a positive electrode coating 12, thereby saving space and increasing the energy density of the secondary battery 1000. The second negative electrode plate 20b may be coated with the negative electrode coating 22 on both sides, thereby fully utilizing the internal space of the secondary battery 1000, and increasing the energy density of the secondary battery 1000.

In an embodiment of this application, the second single-sided positive electrode plate 10b includes a second positive electrode coating 1012 facing the second negative electrode plate 20b. The capacity of the second positive electrode coating 1012 is C₁₂. The second negative electrode plate 20b includes a second negative electrode coating 2022 facing the second positive electrode coating 1012. The capacity of the second negative electrode coating 2022 is C₂₂. The second inner positive electrode plate 10d includes a second inner positive electrode coating 1032 facing the second inner negative electrode plate 20d. The capacity of the second inner positive electrode coating 1032 is C₃₂. The second inner negative electrode plate 20d includes a second inner negative electrode coating 2042 facing the second inner positive electrode coating 1032. The capacity of the second inner negative electrode coating 2042 is C₄₂, satisfying: 1 < (C₂₂/C₁₂)/(C₄₂/C₃₂) ≤ 1.12. Any value in the range of 1 (excluding 1) to 1.12 may be selected, such as 1.01, 1.02, 1.03, 1.04, 1.05, 1.06, 1.07, 1.08, 1.09, 1.1, 1.11, or 1.12.

The relational expression 1 < (C₂₂/C₁₂)/(C₄₂/C₃₂) ≤ 1.12 defined above means that the capacity ratio of the outermost positive and negative electrode plates (the outermost electrode plates along the first direction Z) is increased to some extent in contrast to the capacity ratio of the inner positive and negative electrode plates, and can compensate for the relative slip between the second negative electrode plate 20b and the second single-sided positive electrode plate 10b caused by a large expansion rate and a large elongation of the second negative electrode plate during charging and discharging. By increasing the ratio of C₂₂ to C₁₂, even if the second negative electrode plate 20b slips relatively, the second negative electrode plate can still properly receive lithium ions deintercalated from the second single-sided positive electrode plate 10b, thereby effectively reducing the occurrence of purple spots, reducing the lithium plating caused by lithium-ion deposition on the surface of the second negative electrode plate 20b due to a relative slip, and improving the safety of the secondary battery 1000.

In addition, it is defined that (C₂₂/C₁₂)/(C₄₂/C₃₂) ≤ 1.12, thereby effectively reducing the probability of an excessive capacity ratio. For example, a relatively large capacity ratio may cause a part of the negative active material to be hardly able to participate in electrochemical reactions. The excessive negative active material not only leads to an increase in cost but also causes the coating to occupy a relatively large space inside the secondary battery 1000, thereby causing energy density loss of the secondary battery 1000. In addition, an excessive capacity ratio also poses risks such as degradation of high-temperature cycling performance. By defining (C₂₂/C₁₂)/(C₄₂/C₃₂) ≤ 1.12, this application can effectively alleviate the problems such as energy density loss, cost increase, and high-temperature cycling degradation caused by an excessive amount of the second negative electrode coating 2022.

In some embodiments, it is defined that 1.02 ≤ (C₂₂/C₁₂) ≤ 1.2. Any value in the range of 1.01 to 1.2 may be selected, such as 1.01, 1.02, 1.03, 1.04, 1.05, 1.06, 1.07, 1.08, 1.09, 1.1, 1.11, or 1.12. The capacity ratio falling within the above range enables the second negative electrode plate 20b to be more adaptable to the second single-sided positive electrode plate 10b during expansion of the second negative electrode plate, and ensures sufficient space and capacity of the second negative electrode plate 20b for adapting to the volume change. This alleviates compression damage to the overall structure of the electrode assembly 100 caused by excessive expansion between the electrode plates, and improves stability of the internal structure of the secondary battery 1000. Further, the above capacity ratio enables the secondary battery 1000 to store and release more electrical energy per unit volume, thereby increasing the energy density of the secondary battery 1000.

The structures of the second single-sided positive electrode plate 10b and the second negative electrode plate 20b may be configured similarly with reference to those of the first single-sided positive electrode plate 10a and the first negative electrode plate 20a described above, the details of which are omitted herein.

In some embodiments, referring to FIG. 4, along the first direction Z, one or more third negative electrode plates 20e are stacked between the first inner negative electrode plate 20c and the second inner negative electrode plate 20d. When a plurality of third negative electrode plates 20e are stacked between the first inner negative electrode plate 20c and the second inner negative electrode plate 20d, a third positive electrode plate 10e is stacked between two adjacent third negative electrode plates 20e along the first direction Z. The plurality of third negative electrode plates 20e and the plurality of third positive electrode plates 10e stacked together increase the total amount of active material, and enable storage of more electrical energy, thereby increasing the energy density of the secondary battery 1000 and meeting the demand of electronic devices for high-energy-density power supplies. Further, the multilayer structure allows more active material to come into contact with the electrolyte solution, thereby facilitating rapid intercalation and deintercalation of lithium ions during charging and discharging, and improving the charge rate and discharge rate of the secondary battery 1000.

According to a second aspect, this application further provides an electronic device, including the secondary battery 1000 disclosed in any one of the embodiments in the first aspect described above. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

### Test methods

### Obtaining of electrode plates

Discharging a lithium-ion secondary battery at a constant current of 0.5C at a temperature of 25 °C until the voltage drops to a discharge cut-off voltage. Disassembling the secondary battery under an argon atmosphere, and taking out a negative electrode plate. Soaking the negative electrode plate in a dimethyl carbonate solvent for 2 hours, and oven-drying the negative electrode plate at 60°C for 1 hour to obtain desired positive and negative electrode plates. The discharge cut-off voltage of the secondary batteries in embodiments and comparative embodiments of this application is 3.0 V. Understandably, when the voltage range marked on the outer packaging of a battery at shipment is 3.0 V to 4.5 V, the charge cut-off voltage is 4.5 V and the discharge cut-off voltage is 3.0 V. Unless otherwise expressly specified, in a secondary battery used as an example in this application, the charge cut-off voltage is 4.5 V and the discharge cut-off voltage is 3.0 V.

Unless otherwise expressly specified, the following test methods are performed using the electrode plates obtained above.

### Test of coating capacity

Taking out the corresponding positive and negative electrode plates from a disassembled battery, each with an area of S. Cutting out a regular-shaped electrode plate specimen with an area of S0 using a punching machine or a cutting machine. Cleaning the negative electrode plate specimen using DMC, and then drying the specimen in an oven at a temperature of 60 °C. Using a lithium sheet as a negative electrode plate, and using the cut negative/positive electrode plate as a positive electrode. Assembling a coin cell using the same separator and electrolyte solution as described herein. Charging the assembled coin cell at a constant voltage of 0.2C until the voltage reaches a charge cut-off voltage of the secondary battery, and then charging the coin cell at a constant voltage until the current tapers off to a cut-off current 0.05C, and then discharging the coin cell at a current of 0.2C until the voltage drops to a discharge cut-off voltage. Recording the capacity at this time as C0. Calculating the capacity of the electrode plate as: C = C0 × S/S0.

### Test of compaction density of a coating

Cutting out a regular-shaped electrode plate specimen with an area of S using a punching machine or a cutting machine. Measuring the mass m of the electrode plate specimen using a precision balance (accuracy: 0.1 mg). Weighing a blank current collector foil with the same area, and subtracting the mass of the blank current collector foil from the mass of the electrode plate specimen to obtain a mass m₁. Measuring the thickness of the electrode plate specimen at different locations on the specimen using a micrometer (accuracy: 1 µm) or a laser thickness gauge. Averaging out the measured values at different locations to obtain a thickness of the electrode plate specimen. Subtracting the average thickness of the blank foil from the thickness of the electrode plate specimen to obtain a thickness of the active coating, denoted as h. Compaction density = m₁/Sh (g/cm³)

### Test of coating weight of a coating

Measuring the total mass of an entire electrode plate using a high-precision electronic balance, denoted as m₂. Cutting out a section of an exposed current collector (uncoated part), and measuring the mass of the cut current collector, denoted as m₃. Measuring the effective coating area A and the total area A' of the electrode plate, and the area B of the exposed current collector using vernier calipers. Calculating the mass of the current collector per unit area as: mass = m³/B. Calculating the coating weight on a single side as: coating weight = (m₂ - A'm₃/B)/A/1540.25 g/1540.25 mm².

### Test of mass percentage of silicon

Testing the mass percentage using energy dispersive X-ray spectroscopy (EDS):
1. Specimen preparation
   Disassembling a battery, and taking out a negative electrode plate.
   Cleaning the negative electrode plate using DMC, and removing the electrolyte solution and other impurities from the surface.
   Drying the cleaned negative electrode plate in an oven.
2. Specimen mounting
   Fixing the dried negative electrode plate to a specimen stub of a scanning electron microscope (SEM) using conductive tape.
   Adjusting the specimen position to ensure that the electron beam of the SEM can accurately irradiate the surface of the negative electrode plate.
   Instrument settings:
   Setting the accelerating voltage of the SEM to 15 kV, setting the intensity of the beam current to a moderate value, and observing the SEM image at a magnification of 1000×.
   In the EDS attachment, selecting a point analysis mode and setting the acquisition time to 30 seconds.
3. Specimen analysis
   Observing the surface morphology of the negative electrode plate using SEM, and selecting a flat region for EDS analysis.
   Performing point analysis, and recording the signal intensity of the characteristic peak of silicon.
4. Data processing
   Analyzing the X-ray signal using EDS software, so as to identify the characteristic peaks of silicon.
   Subtracting background signals, and performing matrix effect corrections.
   Results output:
   Generating a test report to show the mass percentage of silicon in the specimen.
   Performing the test repeatedly on the same specimen to ensure repeatability and accuracy of the results.

### Method for testing lithium plating or purple spots

Leaving a secondary battery to stand at a 25 °C test temperature for 30 minutes, and then charging the battery to 4.5 V progressively according to the following charging steps:
(1) Charging the battery at a constant current of 2.5C until the voltage reaches 4.23 V;
(2) Charging the battery at a constant current of 2C until the voltage reaches 4.3 V;
(3) Charging the battery at a constant current of 1.6C until the voltage reaches 4.5 V; and
(4) Charging the battery at a constant current of 1C until the voltage reaches 4.5 V, and then charging the battery at a constant voltage until the current tapers off to a cut-off current 0.05C.

Leaving the battery to stand for 10 minutes, and then discharging the battery according to the following step:
Discharging the battery at a constant current of 0.2C until the voltage drops to 3 V.

The above charge-discharge process constitutes one cycle. Repeating the above steps for 100 cycles, and then disassembling the secondary battery that is in a fully charged state (the fully charged state means that the battery reaches a nominal voltage 4.5 V), and taking out a first negative electrode plate. A lithium-plating-free region on the surface of the first negative electrode plate is golden yellow, a purple-spotted region is dark purple, and a lithium plating region is grayish-white. If the lithium deposition area on the surface of the first negative electrode plate is greater than or equal to 1 mm², lithium plating is identified, and the electrode plate fails the test. The specimens are tested in groups, and each group includes 20 specimens. The number of failures is N, and the lithium plating rate is N/20. If the purple-spotted area on the surface of the first negative electrode plate is greater than or equal to 1 mm², a purple spot is identified, and the electrode plate fails the test. The specimens are tested in groups, and each group includes 20 specimens. The number of failures is M, and the purple spot rate is M/20.

### Energy density test method

Charging a secondary battery at a constant current of 1C until the voltage reaches a charge cut-off voltage, and then charging the secondary battery at a constant voltage equivalent to the charge cut-off voltage until the current tapers off to 0.05C, and then discharging the secondary battery at a constant current of 0.2C until the voltage drops to 3 V. Recording the discharge energy E. Measuring the outline dimensions of the secondary battery, and calculating the volume of the battery, denoted as V. Calculating the energy density as: W = E/V.

### Embodiment 1-1

### <Preparation of a positive electrode plate>

Mixing lithium cobalt oxide as a positive active material, acetylene black as a positive conductive agent, and polyvinylidene fluoride (PVDF, Mw = 5×10⁵) as a positive electrode binder at a mass ratio of 96 : 2 : 2. Adding N-methyl-pyrrolidone (NMP) as a solvent to formulate a positive electrode slurry in which the solid content is 75 wt%, and stirring well with a vacuum mixer. Using aluminum foil of 10 µm (thickness) × 75 mm (length) × 55 mm (width) in size as a positive current collector, and coating one surface of the positive current collector aluminum foil with the positive electrode slurry evenly. Drying the slurry at 110 °C to obtain a first single-sided positive electrode plate coated with the positive electrode coating on a single side. Preparing a second single-sided positive electrode plate similarly. Subsequently, coating both surfaces of one piece of aluminum foil with the positive electrode coating to obtain a first inner positive electrode plate coated with the positive electrode coating on both sides. Similarly, preparing a second inner positive electrode plate and a third positive electrode plate that are coated with the positive electrode coating on both sides.

### <Preparation of a negative electrode plate>

Mixing graphite powder as a negative active material, silicon powder, conductive carbon black (Super P) as a conductive agent, and styrene-acrylic rubber (SD-3) as a binder at a mass ratio of 67.5 : 30 : 1 : 1.5, so that the mass percentage G₂₁ of silicon in the negative active material is 30%. Subsequently, adding deionized water as a solvent to formulate a negative electrode slurry in which the solid content is 50 wt%, and stirring well. Using copper foil of 8 µm (thickness) × 75 mm (length) × 55 mm (width) in size as a negative current collector, and coating one surface of the negative current collector copper foil with the negative electrode slurry evenly. Drying the slurry at 90 °C. Subsequently, repeating the above steps on the other surface of the negative current collector to obtain a first negative electrode plate coated with the negative electrode coating on both sides. Similarly, preparing a second negative electrode plate and a third negative electrode plate that are coated with the negative electrode coating on both sides. The mass percentage of silicon in the negative active material is the same for all the negative electrode plates.

### <Preparation of a separator>

Using polyethylene as a 7 µm-thick substrate layer, using polyvinylidene fluoride as an adhesive layer, and applying 2 µm-thick aluminum oxide ceramic layer to the adhesive layer on a side facing away from the substrate layer to obtain a porous separator.

### <Preparation of an electrolyte solution>

Mixing ethylene carbonate, ethyl methyl carbonate, and diethyl carbonate at a mass ratio of 30 : 50 : 20 in an dry argon atmosphere to obtain an organic solution, and then adding lithium hexafluorophosphate as a lithium salt into the organic solvent to dissolve, and stirring well to obtain an electrolyte solution in which the lithium salt concentration is 1.15 mol/L.

### <Preparation of a lithium-ion secondary battery>

Stacking the above-prepared first single-sided positive electrode plate, first negative electrode plate, first inner positive electrode plate, first inner negative electrode plate, third positive electrode plate, third negative electrode plate, third positive electrode plate, second inner negative electrode plate, second inner positive electrode plate, second negative electrode plate, and second single-sided positive electrode plate to form the electrode assembly shown in FIG. 4 (with a separator disposed between a positive electrode plate and a negative electrode plate that are adjacent to each other). The first single-sided positive electrode plate and the second single-sided positive electrode plate are the outermost electrode plates on two sides respectively, and the electrode assembly contains a total of 20 layers of positive and negative electrode plates.

The coating on the first single-sided positive electrode plate on a side facing the first negative electrode plate is the first positive electrode coating. The first positive electrode coating is 70.2 mm long, 50.5 mm wide, and 95 µm thick. The coating weight Y₁₁ of the first positive electrode coating is 0.28 g/1540.25 mm². The capacity C₁₁ of the first positive electrode coating is 300 mAh. The coating on the first negative electrode plate on a side facing the first positive electrode coating is the first negative electrode coating. The first negative electrode coating is 72 mm long, 51.8 mm wide, and 82 µm thick. The coating weight Y₂₁ of the first negative electrode coating is 0.11 g/1540.25 mm². The capacity C₂₁ of the first negative electrode coating is 309 mAh. The third negative electrode coating on the first negative electrode plate is the same as the first negative electrode coating except that the thickness is 102 µm. The coating on the first inner positive electrode plate on a side facing the first inner negative electrode plate is the first inner positive electrode coating. The first inner positive electrode coating is 70.2 mm long, 50.5 mm wide, and 100 µm thick. The coating weight Y₃₁ of the first inner positive electrode coating is 0.28 g/1540.25 mm². The capacity C₃₁ of the first inner positive electrode coating is 300 mAh. The coating on the first inner negative electrode plate on a side facing the first inner positive electrode coating is the first inner negative electrode coating. The first inner negative electrode coating is 72 mm long, 51.8 mm wide, and 82 µm thick. The coating weight Y₄₁ of the first inner negative electrode coating is 0.102 g/1540.25 mm². The capacity C₄₁ of the first inner negative electrode coating is 306 mAh.

The parameters of the third positive electrode plate are the same as those of the first inner positive electrode plate. The parameters of the third negative electrode are the same as those of the first inner negative electrode coating. The parameters of the second inner negative electrode plate are the same as those of the first inner negative electrode plate. The parameters of the second inner positive electrode plate are the same as those of the first inner positive electrode plate. The parameters of the second negative electrode plate are the same as those of the first negative electrode plate. The parameters of the second single-sided positive electrode plate are the same as those of the first single-sided positive electrode plate.

Placing an aluminum laminated film, stamped to form a recess, into an assembly fixture, with the recess side facing upward. Placing the electrode assembly into the recess, and applying an external force to press the electrode assembly tightly. Subsequently, covering the electrode assembly with another stamped aluminum laminated film, with the recess side facing downward. Performing processes such as sealing, electrolyte injection, hot pressing, formation, and shaping to obtain a lithium-ion secondary battery.

Unlike Embodiment 1-1, the relevant parameters in Embodiments 1-2 to 1-26 and Comparative Embodiments 1-1 to 1-2 are shown in Table 1 below.

**Table 1**

| | C₁₁ (mAh) | C₂₁ (mAh) | C₂₁/C₁₁ | C₃₁ (mAh) | C₄₁ (mAh) | C₄₁/C₃₁ | (C₂₁ /C₁₁)/( C₄₁/C₃₁) | Number of cycles accumulated when capacity retention rate drops to 80% by cycling at 45 °C | Purple spot rate | Lithium plating rate |
|---|---|---|---|---|---|---|---|---|---|---|
| Comparative Embodiment 1-1 | 300 | 306 | 1.02 | 300 | 306 | 1.02 | 1 | 125 | 16/20 | 16/20 |
| Comparative Embodiment 1-2 | 300 | 342 | 1.14 | 300 | 306 | 1.02 | 1.13 | 250 | 3/20 | 3/20 |
| Embodiment 1-1 | 300 | 309 | 1.03 | 300 | 306 | 1.02 | 1.01 | 266 | 8/20 | 8/20 |
| Embodiment 1-2 | 300 | 312 | 1.04 | 300 | 306 | 1.02 | 1.02 | 278 | 5/20 | 5/20 |
| Embodiment 1-3 | 300 | 321 | 1.07 | 300 | 306 | 1.02 | 1.05 | 290 | 4/20 | 4/20 |
| Embodiment 1-4 | 300 | 330 | 1.1 | 300 | 306 | 1.02 | 1.08 | 340 | 3/20 | 3/20 |
| Embodiment 1-5 | 300 | 336 | 1.12 | 300 | 306 | 1.02 | 1.10 | 325 | 3/20 | 3/20 |
| Embodiment 1-6 | 300 | 339 | 1.13 | 300 | 306 | 1.02 | 1.11 | 300 | 3/20 | 3/20 |
| Embodiment 1-7 | 300 | 342 | 1.14 | 300 | 306 | 1.02 | 1.12 | 280 | 2/20 | 2/20 |
| Embodiment 1-8 | 300 | 339 | 1.13 | 300 | 306 | 1.02 | 1.11 | 260 | 2/20 | 2/20 |
| Embodiment 1-9 | 300 | 339 | 1.13 | 300 | 315 | 1.05 | 1.08 | 252 | 2/20 | 2/20 |
| Embodiment 1-10 | 300 | 339 | 1.13 | 300 | 324 | 1.08 | 1.05 | 200 | 2/20 | 2/20 |
| Embodiment 1-11 | 300 | 339 | 1.13 | 300 | 330 | 1.1 | 1.03 | 183 | 1/20 | 1/20 |
| Embodiment 1-12 | 300 | 342 | 1.14 | 300 | 336 | 1.12 | 1.02 | 160 | 1/20 | 1/20 |
| Embodiment 1-13 | 300 | 345 | 1.15 | 300 | 339 | 1.13 | 1.02 | 145 | 1/20 | 1/20 |
| Embodiment 1-14 | 300 | 348 | 1.16 | 300 | 342 | 1.14 | 1.02 | 130 | 1/20 | 1/20 |
| Embodiment 1-15 | 300 | 351 | 1.17 | 300 | 345 | 1.15 | 1.02 | 123 | 1/20 | 1/20 |
| Embodiment 1-16 | 300 | 360 | 1.2 | 300 | 354 | 1.18 | 1.02 | 95 | 0/20 | 0/20 |
| Embodiment 1-17 | 300 | 363 | 1.21 | 300 | 357 | 1.19 | 1.02 | 80 | 0/20 | 0/20 |
| Embodiment 1-18 | 60 | 62 | 1.04 | 60 | 61 | 1.02 | 1.02 | 200 | 6/20 | 6/20 |
| Embodiment 1-19 | 75 | 78 | 1.04 | 75 | 77 | 1.02 | 1.02 | 276 | 0/20 | 0/20 |
| Embodiment 1-20 | 90 | 94 | 1.04 | 90 | 92 | 1.02 | 1.02 | 275 | 2/20 | 2/20 |
| Embodiment 1-21 | 100 | 104 | 1.04 | 100 | 102 | 1.02 | 1.02 | 276 | 3/20 | 3/20 |
| Embodiment 1-22 | 200 | 208 | 1.04 | 200 | 204 | 1.02 | 1.02 | 272 | 4/20 | 4/20 |
| Embodiment 1-23 | 300 | 312 | 1.04 | 500 | 510 | 1.02 | 1.02 | 265 | 5/20 | 5/20 |
| Embodiment 1-24 | 400 | 416 | 1.04 | 500 | 510 | 1.02 | 1.02 | 225 | 8/20 | 8/20 |
| Embodiment 1-25 | 500 | 520 | 1.04 | 500 | 510 | 1.02 | 1.02 | 201 | 10/20 | 10/20 |
| Embodiment 1-26 | 600 | 624 | 1.04 | 600 | 612 | 1.02 | 1.02 | 169 | 13/20 | 13/20 |

According to Table 1 above, with reference to Embodiments 1-1 to 1-7 and Comparative Embodiments 1-1 to 1-2, in Comparative Embodiment 1-1, (C₂₁/C₁₁)/(C₄₁/C₃₁) is equal to 1, which is relatively small, meaning that the capacity ratio of the outer positive and negative electrode plates of the secondary battery is equal to the capacity ratio of the inner positive and negative electrode plates. As a result, it may be difficult for the outer first negative electrode plate to receive lithium ions deintercalated from the first single-sided positive electrode plate due to slip, thereby being prone to cause purple spots. In addition, lithium ions are prone to deposit on the surface of the first negative electrode plate, resulting in lithium plating. In Comparative Embodiment 1-2, (C₂₁/C₁₁)/(C₄₁/C₃₁) is relatively small, which may cause an excessive capacity ratio, making it difficult for a part of the negative active material to participate in electrochemical reactions, and resulting in energy density loss in the secondary battery. This also poses risks such as high-temperature cycling performance deterioration, and leads to a relatively small number of cycles accumulated when the capacity retention rate drops to a cut-off value. Further, this causes deterioration of the high-temperature cycling performance, and may give rise to purple spots and lithium plating.

By contrast, in Embodiments 1-1 to 1-7, it is defined that 1 < (C₂₁/C₁₁)/(C₄₁/C₃₁) ≤ 1.12, meaning that the capacity ratio of the outer positive and negative electrode plates is increased on the basis of the specified capacity ratio of the inner positive and negative electrode plates. Therefore, even if the first negative electrode plate slips relatively, the first negative electrode plate can still properly receive lithium ions deintercalated from the first single-sided positive electrode plate, thereby effectively reducing the occurrence of purple spots, reducing the lithium plating caused by lithium-ion deposition on the surface of the first negative electrode plate due to a relative slip, and improving the safety of the secondary battery. In addition, this arrangement can effectively alleviate the problems such as energy density loss, cost increase, and high-temperature cycling degradation caused by an excessive amount of the first negative electrode coating.

In Embodiments 1-3 to 1-6, the lithium plating rate and purple spot rate are both low and pose little impact on the energy density of the secondary battery, causing little degradation of the high-temperature cycling performance of the secondary battery. The number of cycles accumulated when the capacity retention rate drops to a cut-off value is relatively large. In order to reduce the occurrence of lithium plating and purple spots while improving the high-temperature cycling capacity retention rate of the secondary battery, in an embodiment of this application, it is preferable that 1.05 ≤ (C₂₁/C₁₁)/(C₄₁/C₃₁) ≤ 1.11.

With reference to Embodiments 1-1 to 1-17, in Embodiment 1-17, the values of C₂₁ and C₄₁ are relatively large, which may lead to an excess of the first negative electrode coating and the first inner negative electrode coating. This results in a relatively large loss of energy density and a relatively small number of cycles accumulated when the capacity retention rate drops to a cut-off value. Further, the lithium plating rate and purple spot rate in Embodiment 1-17 are similar to those in Embodiment 1-16. However, the impact on energy density in Embodiment 1-16 is less than that in Embodiment 1-17. Therefore, in an embodiment of this application, the capacity ratio may be set to satisfy: 1.03 ≤ (C₂₁/C₁₁) ≤ 1.2 and 1.02 ≤ (C₄₁/C₃₁) ≤ 1.18.

With reference to Embodiments 1-18 to 1-26 and Comparative Embodiments 1-1 to 1-2, in Embodiments 1-18 to 1-26, the lithium plating rate and purple spot rate are both lower than those in Comparative Embodiments 1-1 to 1-2. Within different capacity ranges, the capacity ratio falling within the range of 1 < (C₂₁/C₁₁)/(C₄₁/C₃₁) ≤ 1.12 can reduce the lithium plating rate and purple spot rate. In Embodiment 1-26, the values of C₁₁, C₂₁, C₃₁, and C₄₁ are all relatively large, and are prone to cause degradation of the high-temperature cycling performance of the secondary battery. In addition, the lithium plating rate and purple spot rate are both relatively high. In Embodiment 1-18, the values of C₁₁, C₂₁, C₃₁, and C₄₁ are all relatively small, and can hardly meet the long-runtime requirement of the secondary battery. In addition, the single-layer coating is relatively thin, thereby being prone to cause non-homogeneity of processing, lithium plating, and even degradation of high-temperature cycling performance. In an embodiment of this application, with reference to Embodiments 1-19 to 1-25, the capacities may be set to satisfy: 75 mAh ≤ C₁₁ ≤ 500 mAh, 78 mAh ≤ C₂₁ ≤ 520 mAh, 75 mAh ≤ C₃₁ ≤ 500 mAh, and 77 mAh ≤ C₄₁ ≤ 510 mAh, thereby reducing the occurrence of purple spots and lithium plating, and improving the versatility of the secondary battery 1000.

The relevant parameters in Embodiments 2-1 to 2-8 are shown in Table 2 below.

**Table 2**

| | G₂₁ | C₂₁ (mAh) | Energy density (Wh/L) | Purple spot rate | Lithium plating rate |
|---|---|---|---|---|---|
| Embodiment 2-1 | 2% | 161 | 585 | 0/20 | 0/20 |
| Embodiment 2-2 | 2.5% | 164 | 595 | 0/20 | 0/20 |
| Embodiment 2-3 | 5% | 178 | 633 | 1/20 | 1/20 |
| Embodiment 2-4 | 10% | 208 | 734 | 1/20 | 1/20 |
| Embodiment 2-5 | 20% | 268 | 820 | 2/20 | 2/20 |
| Embodiment 2-6 | 40% | 387 | 1279 | 5/20 | 5/20 |
| Embodiment 2-7 | 50% | 446 | 1392 | 7/20 | 7/20 |
| Embodiment 2-8 | 55% | 476 | 1485 | 11/20 | 11/20 |

According to Table 2 above, with reference to Embodiments 2-1 to 2-8, in Embodiment 2-1, the mass percentage G₂₁ of silicon in the first negative electrode coating is relatively low, making it difficult to increase the energy density of the secondary battery. Further, the purple spot rate and lithium plating rate in Embodiment 2-1are similar to those in Embodiment 2-2 while G₂₁ in Embodiment 2-2 is larger than that in Embodiment 2-1, thereby increasing the energy density of the secondary battery. In Embodiment 2-8, the mass percentage G₂₁ of silicon in the first negative electrode coating is relatively high. This may cause an excessively intense volume expansion effect and give rise to a relatively large stress within the negative electrode coating and consequently a relatively high purple spot rate and lithium plating rate. Therefore, in an embodiment of this application, the mass percentage of silicon is set to satisfy: 2.5% ≤ G₂₁ ≤ 50%, and the corresponding capacity C₂₁ is preferably set to satisfy: 164 mAh ≤ C₂₁ ≤ 446 mAh.

With reference to Embodiments 2-4 to 2-5 and Embodiment 1-4 shown in Table 1, in which the lithium plating rate and the purple spot rate are both relatively low and G₂₁ is relatively large, in order to increase the energy density while reducing lithium plating, the mass percentage of silicon may be preferably set to satisfy: 10% ≤ G₂₁ ≤ 30%, and the corresponding capacity C₂₁ may be further preferably set to satisfy: 208 mAh ≤ C₂₁ ≤ 330 mAh.

Finally, it is hereby noted that the above embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A secondary battery (1000), comprising an electrode assembly (100), wherein the electrode assembly (100) comprises a first single-sided positive electrode plate (10a), a first negative electrode plate (20a), a first inner positive electrode plate (10c), and a first inner negative electrode plate (20c) that are sequentially stacked along a first direction (Z); and the first single-sided positive electrode plate (10a) is an outermost electrode plate of the electrode assembly (100), **characterized in that**:
the first single-sided positive electrode plate (10a) comprises a first positive electrode coating (1011) facing the first negative electrode plate (20a), and a capacity of the first positive electrode coating (1011) is C₁₁; the first negative electrode plate (20a) comprises a first negative electrode coating (2021) facing the first positive electrode coating (1011), and a capacity of the first negative electrode coating (2021) is C₂₁;
the first inner positive electrode plate (10c) comprises a first inner positive electrode coating (1031) facing the first inner negative electrode plate (20c), and a capacity of the first inner positive electrode coating (1031) is C₃₁; the first inner negative electrode plate (20c) comprises a first inner negative electrode coating (2041) facing the first inner positive electrode coating (1031), and a capacity of the first inner negative electrode coating (2041) is C₄₁,
satisfying: 1 < (C₂₁/C₁₁)/(C₄₁/C₃₁) ≤ 1.12.

2. The secondary battery (1000) according to claim 1, **characterized in that** 1.05 ≤ (C₂₁/C₁₁)/(C₄₁/C₃₁) ≤ 1.11.

3. The secondary battery (1000) according to claim 1, **characterized in that** 1.03 ≤ (C₂₁/C₁₁) ≤ 1.2.

4. The secondary battery (1000) according to claim 1, **characterized in that** 1.02 ≤ (C₄₁/C₃₁) ≤ 1.18.

5. The secondary battery (1000) according to claim 1, **characterized in that**
75 mAh ≤ C₁₁ ≤ 500 mAh;
78 mAh ≤ C₂₁ ≤ 520 mAh;
75 mAh ≤ C₃₁ ≤ 500 mAh; and
77 mAh ≤ C₄₁ ≤ 510 mAh.

6. The secondary battery (1000) according to claim 1, **characterized in that** a compaction density of the first negative electrode coating (2021) is less than a compaction density of the first inner negative electrode coating (2041).

7. The secondary battery (1000) according to claim 6, **characterized in that** the first negative electrode plate (20a) further comprises a third negative electrode coating (2023) facing the first inner positive electrode plate (10c), and a compaction density of the first negative electrode coating (2021) is less than a compaction density of the third negative electrode coating (2023).

8. The secondary battery (1000) according to claim 1, **characterized in that** a coating weight of the first negative electrode coating (2021) is greater than a coating weight of the first inner negative electrode coating (2041).

9. The secondary battery (1000) according to claim 1, **characterized in that** the first negative electrode coating (2021) comprises a negative active material, the negative active material comprises silicon, and a mass percentage of the silicon in the negative active material is G₂₁, satisfying: 2.5% ≤ G₂₁ ≤ 50%.

10. The secondary battery (1000) according to claim 9, **characterized in that** 10% ≤ G₂₁ ≤ 30%.

11. The secondary battery (1000) according to claim 1, **characterized in that** the secondary battery (1000) further comprises a housing (200), and the first single-sided positive electrode plate (10a) is fixed to an inner wall of the housing (200).

12. The secondary battery (1000) according to any one of claims 1 to 11, **characterized in that** the electrode assembly (100) further comprises a second inner negative electrode plate (20d), a second inner positive electrode plate (10d), a second negative electrode plate (20b), and a second single-sided positive electrode plate (10b) that are sequentially stacked along the first direction (Z);
along the first direction (Z), outermost electrode plates on two sides of the electrode assembly (100) are the second single-sided positive electrode plate (10b) and the first single-sided positive electrode plate (10a) respectively;
the second single-sided positive electrode plate (10b) comprises a second positive electrode coating (1012) facing the second negative electrode plate (20b), and a capacity of the second positive electrode coating (1012) is C₁₂; the second negative electrode plate (20b) comprises a second negative electrode coating (2022) facing the second positive electrode coating (1012), and a capacity of the second negative electrode coating (2022) is C₂₂; and
the second inner positive electrode plate (10d) comprises a second inner positive electrode coating (1032) facing the second inner negative electrode plate (20d), and a capacity of the second inner positive electrode coating (1032) is C₃₂; the second inner negative electrode plate (20d) comprises a second inner negative electrode coating (2042) facing the second inner positive electrode coating (1032), and a capacity of the second inner negative electrode coating (2042) is C₄₂, satisfying: 1 < (C₂₂/C₁₂)/(C₄₂/C₃₂) ≤ 1.12.

13. The secondary battery (1000) according to claim 12, **characterized in that** 1.02 ≤ (C₂₂/C₁₂) ≤ 1.2.

14. The secondary battery (1000) according to claim 12, **characterized in that**, along the first direction (Z), one or more third negative electrode plates (20e) are stacked between the first inner negative electrode plate (20c) and the second inner negative electrode plate (20d); and
when a plurality of third negative electrode plates (20e) are stacked between the first inner negative electrode plate (20c) and the second inner negative electrode plate (20d), a third positive electrode plate (10e) is stacked between two adjacent third negative electrode plates (20e) along the first direction (Z).

15. An electronic device, **characterized in that** the electronic device comprises the secondary battery (1000) according to any one of claims 1 to 14.
